(19) Europäisches Patentamt / European Patent Office / Office européen des brevets

(11) **EP 4 342 306 A1**

(12) **EUROPEAN PATENT APPLICATION**

(43) Date of publication:
**27.03.2024  Bulletin 2024/13**

(21) Application number: **23198351.1**

(22) Date of filing: **19.09.2023**

(51) International Patent Classification (IPC):
*A23L 7/10* $^{(2016.01)}$    *A21D 6/00* $^{(2006.01)}$
*A21D 10/00* $^{(2006.01)}$   *A21D 10/04* $^{(2006.01)}$
*A21D 13/02* $^{(2006.01)}$   *A21D 13/04* $^{(2017.01)}$
*A21D 13/06* $^{(2017.01)}$   *A21D 13/44* $^{(2017.01)}$
*A21D 13/80* $^{(2017.01)}$   *A23C 11/10* $^{(2021.01)}$
*A23L 2/38* $^{(2021.01)}$    *A23K 10/00* $^{(2016.01)}$

(52) Cooperative Patent Classification (CPC):
**A23L 7/10; A21D 6/00; A21D 10/002; A21D 10/04;
A21D 13/02; A21D 13/04; A21D 13/06;
A21D 13/44; A21D 13/80; A23C 11/10; A23L 2/38**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **20.09.2022  NL 2033079**

(71) Applicant: **Cérélia Development B.V.**
**3361 GN Sliedrecht (NL)**

(72) Inventors:
• **BREEDVELD, Mario**
  **3361 GN SLIEDRECHT (NL)**
• **BRUGGINK, Suzan Emma**
  **3361 GN SLIEDRECHT (NL)**
• **VAN DEN BERG, Lina Hinrike Alwine**
  **3361 GN SLIEDRECHT (NL)**

(74) Representative: **van Dam, Vincent**
**Octrooibureau Vriesendorp & Gaade B.V.
Koninginnegracht 19
2514 AB Den Haag (NL)**

(54) **PANCAKE PRODUCTS BASED ON OAT FLOUR**

(57)    The invention relates to a batter for pancake products prepared with a suspension and a method for preparing said batter. The invention also relates to a method for manufacturing said pancake products, and to said pancake products as such, such as Dutch pancakes, poffertjes (tiny Dutch pancakes), and American pancakes.

EP 4 342 306 A1

**Description**

The invention relates to a batter for pancake products and a method for preparing said batter. The invention also relates to a method for manufacturing said pancake products, and to said pancake products as such, such as regular Dutch pancakes, poffertjes (tiny Dutch pancakes), and American pancakes.

**Introduction**

Pancake products, such as regular Dutch pancakes, poffertjes, or American pancakes, are normally prepared from batter that comprises animal milk, in particular cow milk. Cow milk is an important ingredient because it comprises proteins, fat, and sugars such as lactose and these compounds contribute to the technical properties as well as sensory properties of the pancake product.

The sensory properties can be seen as the appearance, aroma, texture and taste of the pancake product. These properties are caused by heating of the product and include the reaction of an acid with a baking powder and the so-called Maillard reaction. This reaction which involves browning of the pancake products links amino acids and milk sugars during baking that gives the food its distinctive flavour. Also milk fat has influence on the taste of the pancake product, because it contributes to creaminess of the pancake products, which on its turn contributes to the sensory properties.

The disadvantage of using dairy, in particular cow milk, is that it has a negative impact on the environment because the animals (e.g. dairy cows) producing it contribute to nitrogen derived atmospheric pollution.

It is known to use oat based products as a substitute for dairy products or for replacing dairy products for various purposes.

For instance, US 2014/0193563 A1 discloses the preparation of Ready-To-Drink (RTD) or Ready-To-Eat (RTE) products wherein in this preparation procedure, oat flour is typically hydrated by dispersing the oat flour in water and heating the slurry using an appropriate time and temperature combination that results in starch gelatinization. Then the slurry needs to be cooled down to blend the other ingredients. Then the oat flour slurry may be pasteurized or sterilized by any suitable means such as High Temperature Short time (HTST) pasteurization or Ultra High Temperature (UHT) sterilization. Various other applications of oat flour are mentioned in US 2014/0193563 A1, including for pancakes in general, but without teaching how to use oat flour for these pancakes.

US 5,686,123 A discloses a milky product based on oats as basis of or as additive for ice-cream, gruel, yoghurt and milkshake, or as health drink or snack between meals.

CN 108887346 A discloses a vegetable pancake, made with, by weight, 40-60 parts of wheat flour, 10-15 parts of multi-grain flour, 30-50 parts of vegetables, 2-3 parts of edible salt, 3-5 parts of chicken egg, and 80-110 parts of water. Oat flour is suggested as one of the possibilities for the grain powder used herein.

The document US2004/0043123 A1 provides concrete teachings on the preparation of pancake products. Specifically, it discloses ready-to-use refrigerable liquid batter for preparing pancakes, waffles, brownies, muffins, cakes and the like, comprising a starch component and an organic acid or a mixture of organic acids, characterised in that it has been microbiologically stabilised by heating to a temperature below the gelatinisation temperature of the starch component for a time period sufficient to substantially reduce the bacterial count of the batter so as to make the batter storable for at least three weeks at a temperature of 8°C or lower. US2004/0043123 A1 mentions that during preparation of the batter, ideally gelatinisation should not occur or, at least, should not occur to an extent substantially affecting the pourability of the batter, until the batter is fried.

**Summary of the invention**

With the present invention the inventors aim to provide a pancake product that has a low content of dairy or which is even free from dairy while still keeping the technical properties, sensory properties and shelf life of comparable pancake products that do comprise dairy. On the other hand, the inventors also aim to provide a preparation process for making pancake products wherein the shape and flow behaviour of batter can be controlled and adapted to specific pancake products, such as regular pancakes, American pancakes and poffertjes (tiny Dutch pancakes).

To achieve this, the present invention relates in one aspect to a method for preparing a batter for a pancake product, comprising

i) providing a suspension obtained by:

a) mixing oat flour and water to obtain a mixture, wherein the amount of said oat flour admixed with said water is 8 to 12 wt.% based on the total weight of the mixture;
b) heating the mixture to a temperature of 70 to 92,5 °C and keeping the mixture at this temperature for a period of between 15 and 70 minutes to allow gelatinization;
c) cooling down the heated mixture to a temperature in the range of 20 to 50°C;

to obtain a suspension with a Posthumus viscosity in a range of between 56 s and 155 s at a temperature between 20 to 25 °C (corresponding to between $3{,}0 \times 10^3$ and $4{,}9 \times 10^7$ mPa.s Brookfield viscosity), wherein said Posthumus viscosity is determined as described further on in the description;
ii) providing conventional batter ingredients for pancake products;
iii) mixing the suspension and the conventional batter ingredients to obtain said batter.

The invention relates in a second aspect to a batter for a pancake product, obtained by or obtainable by the method of the first aspect.

The invention relates in a third aspect to a method for manufacturing a pancake product, wherein the method comprises the steps of:

-    providing the batter of the second aspect;
-    optionally, pre-heating the batter;
-    applying the batter on a heating plate;
-    baking the batter.

The invention relates in a fourth aspect to a pancake product obtained by or obtainable by the method of the third aspect.

The inventors have found that by using a suspension comprising oat flour in water as defined above and prepared as described above an excellent dairy substitute for the preparation of pancake products, and in particular Dutch pancakes, poffertjes and American pancakes is provided.

In accordance with these specifications the suspension of the present invention can be used to replace dairy products in preparing batter for pancake products. The inventors have found that the suspension according to the invention and thus the batter according to the invention when used for preparing pancake products and in particular Dutch pancakes, poffertjes and American pancakes result in pancake products that have technical properties, sensory properties and (organoleptic) shelf life with close resemblance to dairy based pancake products. Accordingly, the pancake product according to the invention has similar technical properties, sensory properties and shelf life compared to pancake products based on animal milk. In this respect it is further pointed out that the inventors found that the pancake product prepared in accordance with the invention leaves a "film layer" in the mouth which creates creaminess and greasiness. Creaminess and greasiness are two typical features of fat from animal milk. Also, the pancake products prepared in accordance with the invention contain significantly less calories (Kcal), a lower amount of fat, and a lower amount of carbohydrates than comparable products based on dairy, which is beneficial for health.

In addition, by allowing a degree of gelatinization in the process of preparing the batter, resulting in the viscosities as specified, the invention allows to control and adapt the behaviour of the batter during baking and customize it to specific pancake products, such as regular pancakes, American pancakes and poffertjes (tiny Dutch pancakes) . The fact that the viscosity is controlled within the specified ranges allows to adapt and customize the batter to the desired flow behaviour on a baking plate. On the other hand, the temperature regime to which the oat flour suspension is exposed before making the batter results in excellent pancake products made from the batter, having excellent organoleptic shelf life and sensory properties, in particular by reducing retrogradation by providing suitable gelatinization, and low calories, low amount of fat, and low amount of carbohydrates (sugars).

**Short description of the drawings**

Fig. 1 shows a graph showing the relation between Posthumus viscosity and Brookfield viscosity.
Fig.2 A-E show diagrams with the outcome of a test panel tasting American pancakes according to the invention and American pancakes based on a milk product.

**Detailed description of the invention**

The present invention is in the field of pancake products. Within the context of the present invention a pancake product is a flat cake, often thin and round, prepared from a starch-based batter and which is baked on a hot surface. Without limitation, a pancake product can be a Dutch pancake, an American pancake, a poffertje, a crêpe, a mini pancake, or a plate.

The term "oat flour" is meant to be interpreted as set out in Regulation (EU) No 1308/2013 (GN 1102 90 30). Oat flour is made by grinding oat flakes into a fine powder, which can be used directly to prepare the suspension described above. Oats comprise an outer husk which is removed such that oat groats remain. In order to prepare oat flakes, the oat groats can be heated, chopped, steamed, and flat-rolled in accordance with procedures that are well-known in the art to obtain oat flakes which can be grounded to obtain oat flour in powder form. In the context of the present invention oat flour powder (made by grinding oat flakes), is admixed with water in the first step of preparing a basis suspension for the batter of the invention (step i)a)).

The inventors have found that oat flour appears to have properties that render it particularly suitable for the purposes of the invention, namely in that it contributes for an important part to the advantageous properties of the suspension of the invention and, consequently, the batter and pancake product prepared with the suspension. Namely, during heating of the suspension to a suspension temperature in a range of 70 to 92,5 °C for a time period of between 15 and 70 minutes the starch in the oat flour is at least partially gelatinized. The presence of heat and water causes intermolecular bonds to break between starch molecules (amylose and amylopectine), resulting in more water absorption. This increases viscosity of the suspension and consequently the viscosity of the batter. The fact that the viscosity is controlled within the specified ranges allows to adapt and customize the batter to the desired flow behaviour on a baking plate.

The inventors assume that the bond between the starch and water is strong, such that the absorbed water is not able to form a bond with other conventional batter ingredients during baking. This causes that chemical reactions occur that contributes to the texture, smell, and taste of the pancake products. In particular, the heating step of the suspension contributes to a pancake product with a sweet taste. Therefore, it is possible to reduce the amount of sugar in the batter and this results to a healthier pancake product.

Furthermore, the strong bond causes that desorption of water can be at least partially prevented. This way, the final pancake product does not dry up and is tasteful. Thus, a pancake product with an excellent organoleptic shelf life can be obtained, i.e. the pancake product does not significantly changes its sensory properties.

The subsequent cooling step to a temperature of the suspension in a range of 20 to 50 °C, preferably in a range of 20 to 45 °C, causes that the final suspension has a suitable viscosity and consequently the viscosity of batter is suitable for forming pancake products with similar technical properties as pancake products comprising dairy.

The combination of the heating and cooling step as specified above results in a suspension with a very suitable viscosity for use in the batter of the invention and consequently the prepared pancake product from that batter, which has excellent organoleptic shelf life and sensory properties which are well comparable to products using dairy products as basis.

The amount of oat flour powder admixed with water in the suspension is in a range between 8 and 12 wt.% based on a total weight of the suspension. This amount of oat flour is needed to obtain sufficient starch that can undergo gelatinization and retrogradation which will lead to a good viscosity of the suspension and thus to a good viscosity of the batter. In this respect it is even more preferred that the amount of oat flour powder used to prepare the suspension is in a range between 8,5 to 11,5 wt.%, more preferably in a range between 9 and 11 wt.%, even more preferably 9,5 to 10,5 wt.%, such as 10 wt.% based on the total weight of the suspension.

Furthermore, the suspension is an aqueous suspension and thus comprises water. Water is needed, such that starch can undergo gelatinization. It is preferred that the suspension comprises an amount of water in a range between 88 wt. % and 92 wt.%, preferably in a range between 88,5 wt.% to 91,5 wt.%, more preferably in a range between 89 wt.% to 91 wt.%, even more preferably in a range between 89,5 wt.% to 90,5 wt.%, even more preferably 90 wt.% based on a total weight of the suspension.

Apart from water and oat flour, the suspension may contain further components. For instance, the suspension may comprise a food additive, for example a colouring agent, a sweetener, enzymes or a preservative. A particularly preferred additive is a preservative. A preservative serves to increase the microbiological shelf life of the suspension, but also of the batter and the pancake product. This results in preventing growth of bacteria in the batter and pancake product, leading to a pancake product that is safe for a customer to consume. Examples of preservatives include lactic acid and acetic acid.

The suspension may comprise an enzyme which contributes to the sweetness and gelatinization curve of the suspension. For example, alpha amylase and amyloglucosidase.

An important feature of the present invention is the viscosity. In the course of developing the present invention the inventors used a Posthumus funnel for measuring the viscosity of the suspension and batter. When in the context of the present invention it is indicated that the Posthumus viscosity is "determined as described in the description" the following is meant with this: A Posthumus funnel comprises a container, a nozzle and a plate which is placed between the nozzle and container. The container of the Posthumus funnel as used in the context of the present invention has a tube shape with a diameter of 48 mm and a length of 175 mm. Furthermore, the container has two ends, wherein a first end is open for adding the suspension or batter and the second, opposite end is covered by the plate. The nozzle has a length of 45 mm and comprises two ends, wherein a top end can be covered by the plate and the bottom end is an opening for the suspension or batter to leave the Posthumus funnel. The opening has a diameter of 4 mm and a pin which is placed next to the opening. The container can be filled with the suspension or batter. The cover plate blocks the suspension or batter from flowing from the container towards the nozzle. Once the cover plate is removed, the batter flows from the container to the nozzle and leaves the Posthumus funnel through the opening of the nozzle. In the context of the invention the viscosity is measured in seconds at a temperature between 20 to 25 °C. The measurement starts when the cover plate is removed such that the suspension or batter can flow freely from the container to the opening of the nozzle. The measurement stops when the pin of the nozzle is visible. In other words, the viscosity of the suspension or batter is the time that the suspension or batter needs to leave the funnel.

The inventors have found that a relation between the Posthumus viscosity (expressed in s) as determined in the present invention and the Brookfield viscosity (expressed in mPa.s), can be represented by the following formula

$$y = 12{,}662e^{0{,}0978x}$$

wherein x is the viscosity measured in accordance with the present invention with the Posthumus funnel in seconds and y is the Brookfield viscosity in mPa·s. This is further explained in the Examples section of this application.

The suspension according to the invention has a Posthumus viscosity in a range between 56 s and 155 s at a temperature between 20 to 25 °C, corresponding to a viscosity in a range between $3 \times 10^3$ and $4{,}9 \times 10^7$ mPa·s at a temperature between 20 to 25 °C. The viscosity of the suspension influences the viscosity of the batter. The viscosity of batter is an important property in baking the pancake products of the invention. A high viscosity (low fluidity) of the batter gives a pancake product with a small diameter and a low viscosity of the batter (high fluidity) gives a pancake product with a large diameter, meaning that the viscosity of the suspension and thus of the batter influences the technical properties of a pancake product. In this respect it is preferred that the suspension has a Brookfield viscosity in a range between $4{,}9 \times 10^3$ and $1{,}3 \times 10^6$ mPa·s (corresponding to 61 - 188 s Posthumus viscosity) at a temperature between 20 to 25 °C, more preferably wherein the suspension has a viscosity in a range between $8{,}0 \times 10^3$ and $1{,}8 \times 10^5$ mPa·s (corresponding to 66 - 98 s Posthumus viscosity) at a temperature between 20 to 25 °C, even more preferably wherein the suspension has a viscosity in a range between $1{,}2 \times 10^4$ and $5{,}7 \times 10^4$ mPa·s (corresponding to 70 - 86 s Posthumus viscosity) at a temperature between 20 to 25 °C, most preferably wherein the suspension has a viscosity of about $2{,}1 \times 10^4$ (corresponding to about 76 s Posthumus viscosity) at a temperature between 20 to 25 °C. Accordingly, using the corresponding preferred values as measured with the Posthumus viscometer as described above are therefore it is preferred that the suspension has a Posthumus viscosity in a range between 61 and 118 s at a temperature between 20 to 25 °C, more preferably wherein the suspension has a viscosity in a range between 66 and 98 s at a temperature between 20 to 25 °C, even more preferably wherein the suspension has a viscosity in a range between 70 and 86 s at a temperature between 20 to 25 °C, most preferably wherein the suspension has a viscosity of about 76 s at a temperature between 20 to 25 °C.

For manufacturing the oat flour suspension oat flour powder is used in a range between 8 to 12 wt.% of oat flour powder based on the total weight of the mixture of oat flour and water. It is preferred to mix vigorously, to allow extraction of starch from oat flour and subsequent gelatinization to obtain the desired viscosity. Mixing vigorously for a duration between 60 - 120 s is sufficient, preferably between 80 and 100 s, preferably about 90 s.

After mixing, the mixture is heated to a temperature in a range of 70 to 92,5 °C. In order to allow sufficient gelatinization the mixture should be maintained at this temperature sufficiently long. A period between 15 and 70 minutes is in general sufficient, preferably up to 60 minutes, such as 30 minutes or 60 minutes or any period in between. In a preferred embodiment, the mixture is heated to a temperature in a range of 72,5 °C to 90 °C, preferably in a range of 75 °C to 88 °C, more preferably in a range of 78 °C to 88 °C, more preferably in a range of 80 °C to 88 °C, even more preferably to a temperature of about 85 °C and maintained at these temperatures for the above specified durations. During this heating step a certain amount of starch absorbs water, i.e. gelatinization takes place. The inventors found that if a high percentage of the starch is gelatinized, a suspension with a too high viscosity is obtained and if a low percentage of starch is gelatinized, a suspension with a too low viscosity is obtained. As mentioned before, the viscosity of the suspension contributes to the viscosity of the batter. Thus, a high percentage of gelatinized starch results in a batter with a high viscosity and a low percentage of gelatinized starch results in a batter with a low viscosity. Under the above specified heating conditions, the batter prepared from a suspension according to the invention comprises a very suitable amount of starch that is gelatinized, leading to a pancake product which has high similar properties compared to pancake products comprising animal milk.

The inventors measured the viscosity of the mixture after heating with a Posthumus funnel, as described above. It is preferred that the Posthumus viscosity of the heated mixture before cooling measured as described above is between 20 and 60 seconds, preferably between 25 and 55 seconds, more preferably between 30 and 50 seconds, even more preferably between 35 and 49 seconds, and even more preferably between 27 and 37 seconds. These values can be calculated to mPa.s values in accordance with the abovementioned formula.

After the aforementioned step of heating, the heated mixture is cooled to a temperature in a range of 20 to 50 °C. This step contributes to obtaining the desired viscosity. It is preferred in this respect that the mixture is cooled to a temperature in a range between 22,5 and 45 °C, preferably between 25 and 40 °C, more preferably between 30 and 35 °C, even more preferably to a temperature of about 32,5 °C. Under the aforementioned heating and cooling conditions, a suspension can be obtained that gives the batter excellent properties such that a pancake product can be obtained that is tasteful, has texture, and is not sticky.

Thus, the aforementioned mixing, heating and cooling steps lead to a suspension which has an excellent viscosity that leads to an excellent viscosity of the batter comprising the suspension, such that a pancake product can be obtained with high similar properties of pancake products using animal milk as a basis.

The invention relates also to a batter for a pancake product obtained or obtainable by the aforementioned method for preparing batter, comprising the suspension prepared in accordance with steps i)a-c) and conventional batter ingredients.

The conventional batter ingredients can be selected from a group consisting of oil, salt, eggs, flour, and optionally sugar and/or additives, or any combination thereof.

Oil can be added to the batter to give the pancake product a flavourful taste. Furthermore, oil prevents the batter to stick to a baking plate, such as a pan.

Eggs comprise proteins which can undergo a reaction during baking, causing a typical smell and flavour of the pancake products. Furthermore, the proteins give the final pancake product structure and provide a nice short bite. In addition, eggs provide emulsification and aerification in the final product. Next to the oat suspension, egg is the most important ingredient in the final batter to obtain the desired pancake product.

Flour can be any type of flour, for example all-purpose flour (APV), buckwheat flour or whole wheat flour. Flour provides fluffy batter, and therefore a fluffy pancake product. Flour binds water and creates structure. Furthermore, the flour provides a chewable texture to the pancake product.

Sugar can be added to the batter to give the batter and thus pancake product a sweet flavour and colour (Maillard reaction).In one embodiment, the additives are selected from a group consisting of, sodium bicarbonate, flavouring, vinegar, and any combination thereof.

Sodium bicarbonate can be added to the batter to give the pancake product an appealing airy texture. In a preferred embodiment, sodium bicarbonate, which is a base, is used in combination with an acid, for example vinegar. The sodium bicarbonate and acid react and a gas carbon dioxide is produced. This gas causes that the batter, and therefore the pancake products, is fluffy. Furthermore, sodium bicarbonate and an acid help the batter to rise.

Flavourings can be added to the batter to give the batter and therefore the pancake product a more flavourful taste. Examples of flavourings are lemon juice, vanilla, or cinnamon.

In one embodiment the batter is a batter for preparing Dutch pancakes and has a viscosity in a range of between 35 to 240 mPa·s at a temperature between 20 to 25 °C, corresponding to Posthumus viscosity determined as described above in a range of between 10 to 30 s.

In another embodiment the batter is a batter for preparing poffertjes and has a viscosity in a range of between 240 to $8,5 \times 10^4$ mPa.s at a temperature between 20 to 25 °C, corresponding to Posthumus viscosity determined as described above in a range of between 30 to 90 s.

In another embodiment the batter is a batter for preparing American pancakes and has a viscosity in a range of between $2,2 \times 10^5$ to $3,9 \times 10^9$ mPa·s at a temperature between 20 to 25 °C, corresponding to Posthumus viscosity determined as described above in a range of between 100 to 200 s.

Regular Dutch pancakes, American pancakes, and poffertjes have their unique smell, taste and appearance. A Dutch pancake has a larger diameter than the American pancake and is also heavier than the American pancake. The Dutch pancakes are well known for adding a sweet or savoury topping before rolling the pancake for consuming. Furthermore, the height of the Dutch pancake is smaller than the height of the American pancake. The poffertjes are smaller and lighter than the American pancakes, and thus also smaller and lighter than the Dutch pancakes. Furthermore, the poffertjes are known for their airy texture and can be dipped in a sauce.

The batters for Dutch pancakes, poffertjes, and American pancakes have different ingredients, water/flour proportions and thus different viscosities. Each batter includes different ingredients that are typical for the type of product. The different batter ingredients and the amount of the batter ingredients cause that the baked pancake products have different sensory and technical properties. Ingredients for Dutch pancakes, poffertjes, and American pancakes are well known in the art. For example, the batter for preparing poffertjes contains buckwheat flour, while the batter for Dutch pancakes and American pancake lacks buckwheat flour. Furthermore, the amount of conventional batter ingredients may vary. For example, the amount of water and the suspension comprising oat flour and water can be higher for Dutch pancakes than for American pancakes.

Exemplary recipes for batters that meet the abovementioned specifications are set out in the Examples section of this application.

In principle the amounts of suspension and conventional batter ingredients can be chosen based on the desired properties (such as taste, contents, viscosity). In suitable embodiments, the water content in the prepared batter is 75 to 40 wt.%. Herein the water may originate from the suspension prepared under step i) a-c in combination with any water added as a conventional batter ingredient or as part of a conventional batter ingredient upon preparing the batter. In case of lumps in the batter, the time period for mixing the suspension and the conventional batter ingredient can be increased or mixing can be performed more vigorously. Increasing the time period for mixing is not beneficial for obtaining a fluffy batter and fluffy pancake product and it is therefore preferred to mix more vigorously than for a longer duration.

The suspension can be preserved at a temperature in a range between 35 to 40 °C. These conditions are sensitive for bacteria to grow. Therefore, it is preferred that the suspension is processed directly after preparing into the batter of the invention. Another advantage of directly processing the suspension is that this ensures optimal viscosity and control of viscosity of the resulting batter. In this respect it is preferred in the method for preparing the batter in accordance with the invention that providing said suspension comprises the method steps for preparing the suspension. Likewise, it is also preferred that the prepared batter is used directly for manufacturing pancakes from it.

The invention relates also to a method for manufacturing a pancake product, wherein the method comprises the steps of:

- providing the batter of the invention;
- optionally pre-heating the batter;
- applying the batter on a heating plate
- baking the batter.

The batter is preferably pre-heated to a temperature in a range between 25 to 35 °C - if the batter is not yet at this temperature - before the batter is applied on a heating plate. Preheating can be carried out using any suitable heating means. In a preferred embodiment, the batter is pre-heated using warm water. The inventors surprisingly found that this pre-heating step contributes to the chemical reactions that take place on the heating plate.

The pancake products can be heated on different heating plates. For example, poffertjes are baked in a closed mold, wherein both sides of a poffertje are baked at the same time. The product needs to properly touch all edges of the mold to obtain an appealing brown colour.

Dutch pancakes and American pancakes are baked on a plate and preferably flipped during the baking step. It is preferred that the batter is processed directly after preparing into the pancake product of the invention. This ensures optimal viscosity and control of viscosity of the resulting pancake product. In this respect it is preferred in the method for preparing the pancake product in accordance with the invention that providing said batter comprises the method for preparing the batter according to the invention.

The invention relates also to a pancake product obtained by or obtainable by the abovementioned method for manufacturing a pancake product. As mentioned above, the pancake product according to the invention has similar sensory properties, technical properties, and a shelf life compared to the sensory properties, technical properties, and a shelf life of pancake products comprising animal milk.

The pancake product may for instance be a Dutch pancake, an American pancake, a poffertje (tiny Dutch pancake), a crêpe, a mini pancake or a plate, preferably wherein the pancake product is a Dutch pancake, an American pancake or a poffertje. When prepared according to the invention these pancake products, while containing no or significantly less dairy, have similar technical properties, sensory properties and shelf life compared to pancake products comprising animal milk.

**Examples**

The following examples are meant to illustrate the invention and not to limit the claims. In the following examples the inventors performed several experiments to obtain the suspension, batter and pancake products. These experiments showed that the obtained pancake products have similar sensory properties, technical properties and shelf life as pancake products comprising animal milk.

**Example 1) Nutritional values suspension vs full fat milk**

The inventors investigated the nutritional values of a suspension of oat flour and water mixed in a 10:90 weight ratio and full fat milk as shown in Table 1.

**Table 1: Nutritional values of full fat milk and the suspension based on oat flour.**

|  | full fat milk (100g) | Suspension (100g) |
| --- | --- | --- |
| Kcal | 152 | 35, 5 |

(continued)

|  | full fat milk (100g) | Suspension (100g) |
|---|---|---|
| Fat (total) (g) | 8,5 | 0,7 |
| Saturated fat (g) | 5, 5 | 0,1 |
| Unsaturated fat (g) | 3,0 | 0,6 |
| Carbohydrates (g) | 11,2 | 6,7 |
| Including sugars (g) | 11,2 | 0,1 |
| Protein (g) | 8,2 | 1,4 |
| Salt (g) | 0,3 | 0,1 |
| Fibers (g) | 0 | 1,2 |

Table 1 shows that the suspension has a lower amount of calories (Kcal), a lower amount of fat, and a lower amount of carbohydrates compared to milk. Furthermore, the suspension has a lower amount of saturated fat than milk. This shows that the suspension according to the invention is a healthy replacement for milk.

**Example 2) Exemplary embodiment for manufacturing a suspension**

Oat flour powder and water were added together in a weight ratio of 10:90 such that a mixture was obtained. The mixture was mixed for 15 seconds with an immersion blander, such that a homogeneous suspension was obtained. The homogeneous suspension was heated to 80 - 82 °C and kept at this temperature for 25 - 35 minutes. The viscosity of the heated mixture was measured with the Posthumus funnel as described in the description, wherein the heated mixture has a viscosity between 35 and 45 seconds. The heated mixture was cooled to 35 - 38 °C to obtain a suspension. The viscosity of the suspension was in a range between 70 to 90 seconds, measured with the Posthumus funnel as described above, corresponding to $1,2{\times}10^4$ to $8,4{\times}10^4$ mPa·s.

**Example 3) Measuring viscosity of suspensions using a Posthumus funnel and Bolswick viscometer**

The inventors prepared four different suspensions (A-D), wherein the suspensions were prepared under different heating conditions. All four suspensions were prepared by adding oat flour powder and water together in a 10:90 weight ratio. The mixture was mixed for several minutes with an immersion blander, such that a homogeneous mixture was obtained.
Mixture (A) was not heated to obtain suspension (A).
Mixture (B) was heated at 85 °C for 60 minutes and afterwards cooled to 35 - 38 °C to obtain suspension (B).
Mixture (C) was heated at 87,5 °C for 30 minutes and afterwards cooled to 35 - 38 °C to obtain suspension (C).
Mixture (D) was heated up to 90 °C and after reaching 90 °C cooled to 35 - 38 °C to obtain suspension (D).
The suspensions were measured with the Posthumus funnel, as described above in the detailed description of the invention, and with a Brookfield viscometer. The results are presented in Table 2.

**Table 2: Viscosity of the suspension, measured with a Posthumus funnel and a Brookfield viscometer.**

| Suspension | Heating temperature (°C) | Time period heating (minutes) | Viscosity measured with Posthumus funnel (s) | Viscosity measured with Brookfield viscometer (mPa.s) |
|---|---|---|---|---|
| A | - | - | 7, 67 | 25 |
| B | 85 | 60 | 56 | 2850 |
| C | 87,5 | 30 | 65 | 6525 |
| D | 90 | 0 | 45 | 1330 |

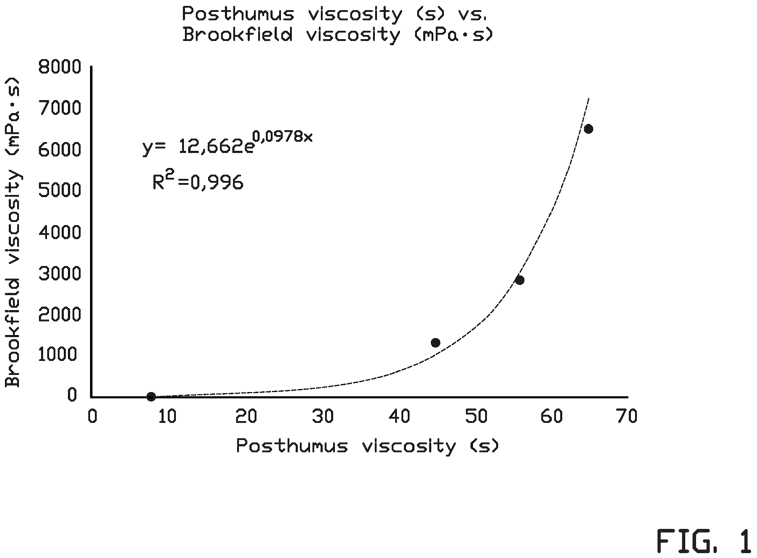

The values of the viscosities presented in Table 2 are plotted in Figure 1, wherein the x axis presents the viscosity measured with the Posthumus funnel in seconds and the y axis presents the viscosity measured with the Brookfield viscometer in mPa.s. The inventors have found that there is an exponential relationship between the Posthumus and Brookfield viscosities, which can be represented by the following formula:

$$y = 12{,}662e^{0{,}0978x}$$

wherein x is the viscosity measured with the Posthumus funnel in seconds and y is the viscosity measured with the Brookfield viscometer in mPa·s. The $R^2$ of the formula is 0,996, which means that the data fits very well with the regression line.

**Example 4) Batter for the pancake products**

4.1) Batter for Dutch pancakes

A batter for a Dutch pancake was prepared by adding the suspension prepared as described under example 2 and conventional batter ingredients together. In this example, the following conventional batter ingredients were used; water, flour, egg, oil, sodium bicarbonate, natural flavouring, salt, potassium sorbate, and sugar.

The suspension described under example 2) and the conventional batter ingredients were mixed to obtain a batter with a water content of 67,7 wt. A homogeneous batter was obtained. Herein, the water content is the amount of water in the prepared batter, which results from the sum of all water present in the ingredients constituting the batter, i.e. suspension, eggs, added water, and any other ingredient.

Table 3 shows an overview of the percentages of the used ingredients. In this calculation, the total amount of dry matter is set on 100%.

**Table 3: Batter ingredients for preparing a Dutch pancake**

|  | Batter (%) | Final product (based on dry matter) (%) |
|---|---|---|
| Total | 100 | 299,6 |
| Water | 30,26 | 90,69 |
| Flour | 21,25 | 63,67 |
| Egg | 9,80 | 29,36 |
| Oil | 5,72 | 17,13 |
| Sodium bicarbonate | 0,12 | 0,37 |
| Mono calcium phosphate | 0,15 | 0,46 |
| Natural flavouring | 0,25 | 0,73 |
| Salt | 0,34 | 1,02 |
| Potassium sorbate | 0,17 | 0,49 |
| Suspension, prepared as described in example 2 | 30,52 | 91,45 |
| Sugar | 1,41 | 4,23 |

The viscosity of the batter was 19,8 seconds, measured with the Posthumus funnel at a temperature in a range between 20 to 23 °C (corresponding to 66 mPa.s).

4.2) Batter for poffertjes

The batter for poffertjes was prepared by adding the suspension described under example 2) and conventional batter ingredients together. In this example, the following conventional batter ingredients are used; water, wheat flour, buckwheat flour, salt, oil, natural flavouring, sodium bicarbonate, natural butter flavour.
The suspension described under example 2 and the conventional batter ingredients were mixed, to obtain a batter with a water content of 52,8 wt.%. A homogeneous batter was obtained. Herein, the water content is the amount of water in the prepared batter, which results from the sum of all water present in the ingredients constituting the batter, i.e. suspension, eggs, added water, and any other ingredient.

Table 4 shows an overview of the percentages of the used ingredients. In this calculation, the total amount of dry matter is set on 100%.

**Table 4: Batter ingredients for preparing poffertjes.**

| | Batter (%) | Final product (based on dry matter) (%) |
|---|---|---|
| total | 100 | 210,5 |
| water | 8,15 | 17,09 |
| wheat flour | 42,11 | 88,65 |
| buckwheat flour | 3,14 | 6,62 |
| Salt | 0,32 | 0,68 |
| Oil | 13,81 | 29,07 |
| Natural flavouring | 0,77 | 1,64 |
| Sodium bicarbonate | 0,41 | 0,87 |
| Mono calcium phosphate | 0,51 | 1,08 |
| Natural butter flavour | 0,06 | 0,13 |
| Suspension, as described under example 2 | 30,71 | 64,67 |

The viscosity of the batter was between 30 to 90 seconds, measured with the Posthumus funnel at a temperature in a range between 20 to 23 °C (corresponding to $2,4 \times 10^2$ to $8,4 \times 10^4$ mPa.s.

4.3) Batter for American pancakes

A batter for an American pancake was prepared by adding the suspension described under example 2) and conventional batter ingredients together. In this example, the following conventional batter ingredients were used; water, flour, oil, eggs, flavouring (vanilla), sugar, salt, monocalcium phosphate (MCF), natrium bicarbonate, and natural aroma.
The suspension described under example 2 and the conventional batter ingredients were mixed to obtain a batter with a water content of 49,98 wt.%. A homogeneous batter was obtained. Herein, the water content is the amount of water in the prepared batter, which results from the sum of all water present in the ingredients constituting the batter, i.e. suspension, eggs, added water, and any other ingredient. Table 5 shows an overview of the percentages of the used ingredients. In this calculation, the total amount of dry matter is set on 100%.

**Table 5: Batter ingredients for preparing an American pancake.**

| | Batter (%) | Final product (based on dry matter) (%) |
|---|---|---|
| total | 100 | 196,84 |
| water | 9,12 | 17,95 |
| Flour | 31,16 | 61,36 |
| Suspension, prepared as described in example 2 | 30,09 | 59,23 |
| Oil | 9,61 | 18,9 |
| eggs | 12,39 | 24,38 |
| flavouring (vanilla) | 0,28 | 0,55 |
| sugar | 6,00 | 11,81 |
| salt | 0,23 | 0,45 |
| MCF | 0,26 | 0,52 |
| natrium bicarbonate | 0,46 | 0,9 |
| natural aroma | 0,40 | 0,79 |

The viscosity of the batter was between 120 to 180 seconds, measured with the Posthumus funnel at a temperature in a range between 24 to 26 °C (corresponding to $1.5 \times 10^6$ - $5,6 \times 10^8$ mPa.s).

**Example 5) Manufacturing the pancake products**

5.1) Dutch Pancake

The batter, obtained under example 4.1), was applied on a hot baking plate. The batter was baked on both sides for in total 2,5 minutes at 180 °C. The obtained Dutch pancake has a diameter of 18 cm, a weight of 60 gram and a height of 2 mm.

5.2) Poffertjes

The batter, obtained under example 4.2, was baked at 180 °C for 3 minutes. The poffertje has a diameter of 4,5 cm and a weight of 8,5 gram.

5.3) American pancake

The batter, obtained under example 4.3, was applied on a hot baking plate and baked on both sides for in total 4 minutes at 180 °C. The obtained American pancake has a diameter between 9 and 10,5 cm, a weight of 43 gram and a height of 12 mm. The batter of the American pancake has a lower viscosity than the batter for the pancake and thus has a smaller diameter, and a higher height than the pancake.
The dimensions specified in this example correspond to that of Dutch pancakes, poffertjes and American pancakes comprising animal milk.

**Example 6) Gelatinisation of starch in different batters**

The inventors compared three different types of batters for pancakes. The first batter (batter 1) comprises animal milk, the second batter (batter 2) comprises a suspension comprising untreated oat flour, and the third batter (batter 3) comprises a suspension comprising pre-treated oat flour prepared in accordance with the invention. Batters 2 and 3 are made on the basis of a suspension of oat flour powder with water in a weight ratio of 10:90. The untreated oat flour suspension used to prepare batter 2 is a suspension that was not exposed to heating or cooling conditions. The suspension used as a basis for batter 3 was prepared by mixing oat flour and water such that a mixture was obtained, wherein the mixture was heated to a temperature of 85 °C for 60 minutes and subsequently cooled down to a temperature of 37,5°C before preparing a batter from it.
The three batters were analysed using Differential Scanning Calorimetry (DSC). DSC measures the heat flow associated with structure and changes in structure as a function of time and temperature, i.e. DSC measures the loss of molecular order during the gelatinization process and measures the molecular reorganization during retrogradation. The results of the DSC are presented in Table 6.

**Table 6: Results of the DSC analysis.**

|  | Peak 1 (°C) | Peak 2 (°C) | Onset 1 (°C) | Onset 2 (°C) | J/g (1) | J/g (2) |
|---|---|---|---|---|---|---|
| Batter 1 | 37,6 | 124,4 | 32,17 | 111,53 | 21,81 | 861.96 |
| Batter 2 | 33,13 | 119,46 | 27,97 | 104,41 | 15,17 | 997,83 |
| Batter 3 | 17,73 | 121,68 | 22,89 | 105,21 | 22,89 | 637,21 |

The first peak indicates gelatinization of starch in the batter and the corresponding amount of J/g indicates the resistance, i.e. viscosity, of the batter. Table 6 shows that the resistance for batter 1 is 21,81 J/g and for batter 3 is 22,89 J/g. This shows that batter 3 comprising the pre-treated oat flour has a comparable resistance, i.e. viscosity, with batter 1 comprising animal milk. The second peak indicates that presence of starch, i.e. starch that is not gelatinized, in the batter. It is noted that the resistance for batter (2) is higher than the resistance for batter (1) and (3). This is due to the higher amount of wheat flour used in batter (2) and due to the pre-treated oat flour in the batter. The results in table 6 indicate that the flow properties of batter 1 and 3 are comparable. In contrast, the resistance of batter 2 differs significantly from that of batter 1 and 3. Therefore, the pancakes made from batter 1 and 3 have similar technical properties and sensory properties even though batter 1 is a standard batter based on animal milk and batter 3 comprises the oat flour suspension of the invention as replacement for milk.

**Example 7) Retrogradation of starch in different Dutch pancakes**

Furthermore, the inventors investigated the gelatinization and retrogradation of starch in five different baked products prepared from comparable batters with the following differences. Product (1) comprises animal milk, product (2) comprises untreated oat flour, product (3-5) comprises a suspension comprising pre-treated oat flour, wherein the suspensions were prepared under different heating conditions.

The suspensions were prepared by adding oat flour and water together in a weight ratio of 10:90. The water and oat flour were mixed such that a homogenous mixture was obtained. The mixtures (3-5) were heated under different conditions to obtain batters (3-5). Mixture (3) was heated to 85 °C and kept at this temperature for 60 minutes, mixture (4) was heated to 87,5 °C and kept at this temperature for 30 minutes, and mixture (5) was heated until it reached a temperature of 90 °C for 0 minutes following cooling down. The heated mixtures were cooled to 37,5 °C to obtain the suspensions (3-5).

The batter (1) was prepared by mixing the animal milk and conventional batter ingredients, and batter (2) was prepared by mixing the untreated oat flour, water and conventional batter ingredients. Batter (3) was prepared by mixing suspension (3) and conventional batter ingredients, batter (4) was prepared by mixing suspension (4) and conventional batter ingredients, batter (5) was prepared by mixing suspension (5) and conventional batter ingredients.

The batters (1-5) were baked at 180 °C for 1 minute and 40 seconds to obtain the Dutch pancakes (1-5). The pancakes (1-5) were cooled and stored at 7 °C. The pancakes (1-5) were analysed on day 0 (P0, products 1A-5A), the day of the production, and day 28 (P28, products 1B-5B). Table 7 shows the results of the DSC analysis.

**Table 7: Results of the DSC analysis.**

| | | Peak 1 (°C) | Peak 2 (°C) | Onset 1 (°C) | Onset2 (°C) | J/g (1) | J/g (2) | Measurement performed |
|---|---|---|---|---|---|---|---|---|
| Product 1A | Reference - pancake comprising animal milk | 33,59 | 135,03 | 28,51 | 130,52 | 10,87 | 737,77 | P0 |
| Product 2A | Control - pancake - untreated oat flour | 34,86 | 126,26 | 29,72 | 108 | 18,65 | 747,91 | |
| Product 3A | Pancake - pre-treated oat flour (60 minutes at 85°C) | 33,6 | 123,18 | 28,77 | 120,48 | 16,48 | 821,71 | |
| Product 4A | Pancake - pre-treated oat flour (30 minutes at 87,5°C) | 42,33 | 188,33 | 38, 64 | 178,73 | 2,43 | 787,47 | |
| Product 5A | Pancake - pre-treated oat flour (0 minutes at 90°C) | 50 | 137,2 | 42, 9 | 127,4 | 16, 87 | 753,42 | |
| Product 1B | Reference - pancake comprising animal milk | 44,79 | 186,33 | 39, 45 | 175,75 | 16, 23 | 374, 88 | P28 |
| Product 2B | Control - pancake - untreated oat flour | 46, 93 | 190, 8 | 40, 66 | 174, 05 | 16, 54 | 433,3 | |
| Product 3B | Pancake - pre-treated oat flour (60 minutes at 85°C) | 52 | 141,14 | 48,3 | 138,13 | 7,5 | 807,44 | |
| Product 4B | Pancake - pre-treated oat flour (30 minutes at 87,5°C) | 31,6 | 181,77 | 27,5 | 174,39 | 8, 87 | 387,32 | |
| Product 5B | Pancake - pre-treated oat flour (0 minutes at 90°C) | 49, 66 | 187,32 | 44,73 | 185,95 | 21,05 | 490,53 | |

P0

The highest resistance of the first peak, as indicated in column 7, was obtained for pancake (2p0). This means that pancake (2p0) comprises the highest amount of starch that was <u>not</u> gelatinized. This pancake (2) was made from batter that comprises untreated oat flour, i.e. oat flour that was not pre-treated and is not according to the invention. This is also indicated by the second peak. The onset temperature of the second peak is lower compared to the other products (108 versus 120 and higher). This means that earlier in the heating process, starch that was not gelatinized during cooking is gelatinized and gives an increase in viscosity. Pancakes (3-5) were made from batters that comprise pre-treated oat flour, wherein the oat flour was treated under different heating conditions. The results from Table 7 show that pancake (4) has the lowest resistance and thus the highest amount of gelatinized starch. Pancake (4) was made from batter (4) comprising a suspension, wherein the suspension comprises a mixture of oat flour and water that was heated to 87,5 °C at kept at this temperature for 30 minutes. This shows that the combination of time and temperature influences the gelatinization of starch.

P28

It is important that during the shelf life of the pancake, the pancakes still have attractive organoleptic properties for a customer. Therefore, the different pancakes are analysed after 28 days using DSC.

Retrograded starch needs more heat to undergo another gelatinization step (caused by heating during the DSC analysis). Therefore, the inventors assume that more starch is retrograded when the temperature at P28 is increased in comparison to the temperature at P0. In order to easily compare the temperature difference between P0 and P28, Table 8 shows the differences between these values (P28 - P0 = difference).

**Table 8: Difference between P0 and P28**

| | | Difference between P0 en P28 | | | | | |
|---|---|---|---|---|---|---|---|
| | | Peak 1 (°C) | Peak 2 (°C) | Onset 1 (°C) | Onset 2 (°C) | J/g (1) | J/g (2) |
| Product 1 | Reference - pancake comprising animal milk | 11,2 | 51,3 | 10, 94 | 45, 23 | 5,36 | -362,89 |
| Product 2 | Control - pancake - untreated oat flour | 12,07 | 64,54 | 10, 94 | 66, 05 | -2,11 | -314, 61 |
| Product 3 | Pancake - pre-treated oat flour (60 minutes at 85°C) | 18,4 | 17, 96 | 19, 53 | 17, 65 | -8, 98 | -14,27 |
| Product 4 | Pancake - pre-treated oat flour (30 minutes at 87,5°C) | -10,73 | -6, 56 | - 11,14 | -4,34 | 6, 44 | -400,15 |
| Product 5 | Pancake - pre-treated oat flour (0 minutes at 90°C) | -0,34 | 50, 12 | 1, 83 | 58,55 | 4, 18 | -262,89 |

Table 8 shows that the temperature was increased for both peak (1) and peak (2) of pancake (1), (2), (3) and (5), while for pancake (4) there was a decrease of the temperature. The suspension used for preparing pancake (4) is heated and kept for 30 minutes at 87, 5 °C and due to the combination of time and temperature, more starch is gelatinized than in the suspensions used for preparing pancakes (3) and (5) as concluded from the P0 measurement.

From the p28 measurement it can be concluded that the gelatinized starch from the suspension used for pancake (4) is less sensitive for retrogradation. Thus, pancake (1), (2), (3) and (5) are more sensitive to retrogradation of the gelatinized starch than pancake (4). In other words, this means that pancake (4) has better sensory properties after 28 days than the other pancakes.

**Example 8) Test panel tasting American pancakes**

Five different American pancakes were evaluated by a test panel of 150 people. The batter for American pancake (8.0) comprises animal milk, i.e. butter milk. The batters (8.1-8.4) used for preparing American pancakes (8.1-8.4) comprises a pretreated oat flour suspension of oat flour mixed with water in a 10:90 weight ratio. The suspension was prepared under different conditions.

The suspension (8.1) was prepared by mixing oat flour and water and heating this mixture to a temperature of 85 °C and maintaining the mixture at this temperature for 2 hours. The heated mixture was cooled to 37,5 °C in a time period of 12 hours.

Suspension (8.2) was prepared by mixing oat flour and water and heating this mixture to a temperature of 85 °C and maintaining the mixture at this temperature for 1 hour. The heated mixture was cooled to 37,5 °C in a time period of 20 minutes.

Suspension (8.3) was prepared by mixing oat flour and water and heating this mixture to a temperature of 87,5 °C and maintaining the mixture at this temperature for 30 minutes. The heated mixture was cooled to 37,5 °C in a time period of 20 minutes.

Suspension (8.4) was prepared under the same heating and cooling conditions as suspension (8.3).

Table 9 shows and overview of the percentages of the used ingredients. In this calculation, the total amount of dry matter is set on 100%.

Table 9 shows that batter (8.1) comprises more sugar and additional oat flour than the other batters (8.2-8.4).

Table 9 shows that the amount of oat flour in batter (8.3) is much higher than the amount of oat flour in batter (8.4). Furthermore, the amount of the suspension comprising oat flour and water in batter (8.3) is much lower than for batter (8.4).

**Table 9: Ingredients of batters for preparing American pancakes (8.1-8.4).**

| | American pancake (8.0) (percentage based on dry weight) | American pancake (8.1) (percentage based on dry weight) | American pancake (8.2) (percentage based on dry weight) | American pancake (8.3) (percentage based on dry weight) | American pancake (8.4) (percentage based on dry weight) |
|---|---|---|---|---|---|
| Water | - | 0,36% | 0,36% | 18,27% | 0,36% |
| wheat flour | 52,20% | 48,54% | 62,56% | 62,56% | 62,56% |
| Suspension comprising oat flour and water | - | 59,71% | 59,71% | 39,81% | 59,71% |
| Oil | 17,19% | 19,06% | 19,06% | 19,06% | 19,06% |
| Egg | 28,63% | 24,58% | 24,58% | 24,58% | 24,58% |
| Flavouring (vanilla) | 0,54% | 0,56% | 0,56% | 0,56% | 0,56% |
| Sugar | 18,42% | 15,88% | 11,91% | 11,91% | 11,91% |
| Salt | 0,55% | 0,46% | 0,46% | 0,46% | 0,46% |
| MCF | 0,74% | 0,52% | 0,52% | 0,52% | 0,52% |
| sodium bicarbonate | 0,67% | 0,20% | 0,20% | 0,20% | 0,20% |
| Natural aroma | 0,70% | 0,79% | 0,79% | - | 0,79% |
| Oat flour | - | 10,05% | - | 1,99 | - |
| Skimmed milk | 41,73% | - | - | - | - |
| Buttermilk powder | 1, 82% | - | - | - | - |
| Total | 163,19% | 183,79% | 183,79% | 183,79% | 183,79% |

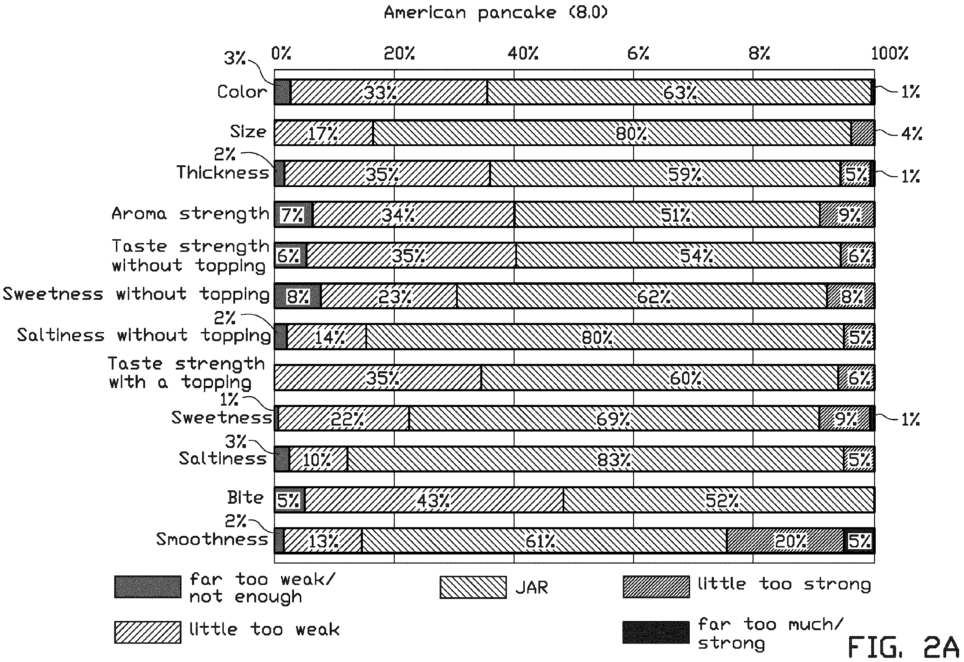

The test panel evaluated the following sensory properties of the American pancake; color, size, thickness, aroma strength, taste strength without topping, sweetness without topping, saltiness without topping, taste strength, sweetness, saltiness, bite, and smoothness. Figures 2 A to E show the results of the test panel with respect to American pancakes (8.0), (8.1), (8.2), (8.3) and (8.4), respectively. JAR% is the percentage that evaluates the properties of the American pancake as exactly good. As can be derived from the figures the sensory properties of the American pancakes in accordance with the invention were in general experienced as exactly good or little too weak or little too strong and comparable to the milk based pancake (8.0).

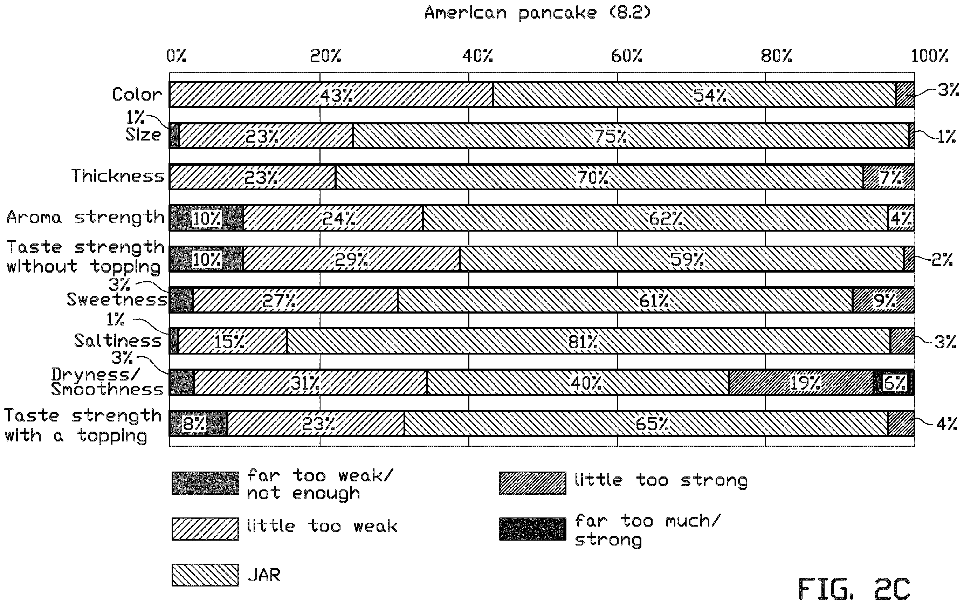

Figure 2A shows that American pancake (8.0) without a topping, which is the reference pancake, has a JAR% for taste strength of 54%. Figure 2C-E show that American pancakes (8.2), (8.3), and (8.4) without a topping have a JAR% for taste strength of 59%, 51%, and 46%, respectively. This shows that the taste strength for American pancakes (8.2), (8.3), and (8.4) without toppings have a comparable taste strength as the conventional American pancake (8.0).

Figure 2A shows that the American pancakes (8.0) with a topping has a JAR% for taste strength of 60%. Figure 2C-E show that American pancakes (8.2), (8.3), and (8.4) with a topping have a JAR% for taste strength of 65%, 69% and 65%, respectively. This shows that the taste strength for American pancakes (8.2), (8.3), and (8.4) with toppings have a batter JAR% than the conventional American pancake (8.0). Furthermore, the amount of sugar used for reference American pancake (8.0) is much higher than the amount of sugar used for American pancakes (8.2), (8.3), and (8.4). Thus, in accordance with the invention a healthier American pancake can be obtained.

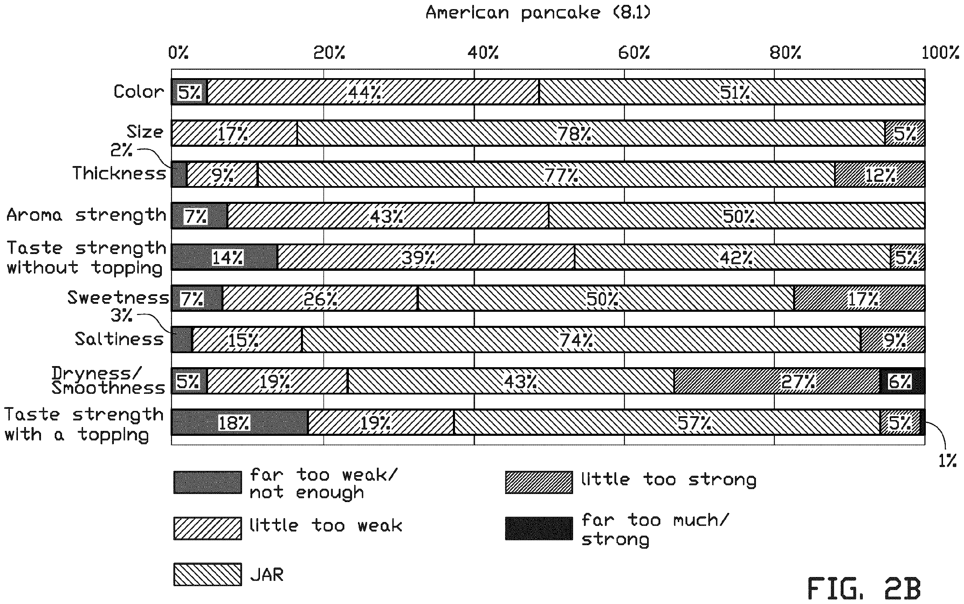

According to Table 9, American pancake (8.1) comprises a higher amount of sugar than American pancakes (8.2), (8.3) and (8.4). Figure 2B shows that American pancake (8.1) without topping has a JAR% for taste strength of 42%. This is lower than for American pancake (8.2), (8.3), and (8.4). Thus, American pancake (8.1) has a higher amount of sugar than American pancakes (8.2), (8.3), and (8.4), and a lower JAR% than American pancakes (8.2), (8.3), and (8.4). This shows that the suspension comprising oat flour and water contributes to the taste of the American pancakes.

An important sensory property is the dryness and smoothness. Other sensory properties may be improved by tweaking the batter recipe, but dryness and smoothness is less easy to control. The test panel could evaluate the dryness/smoothness of the pancake with the following answers: to dry, little too dry, exactly good, little too smooth, too smooth.

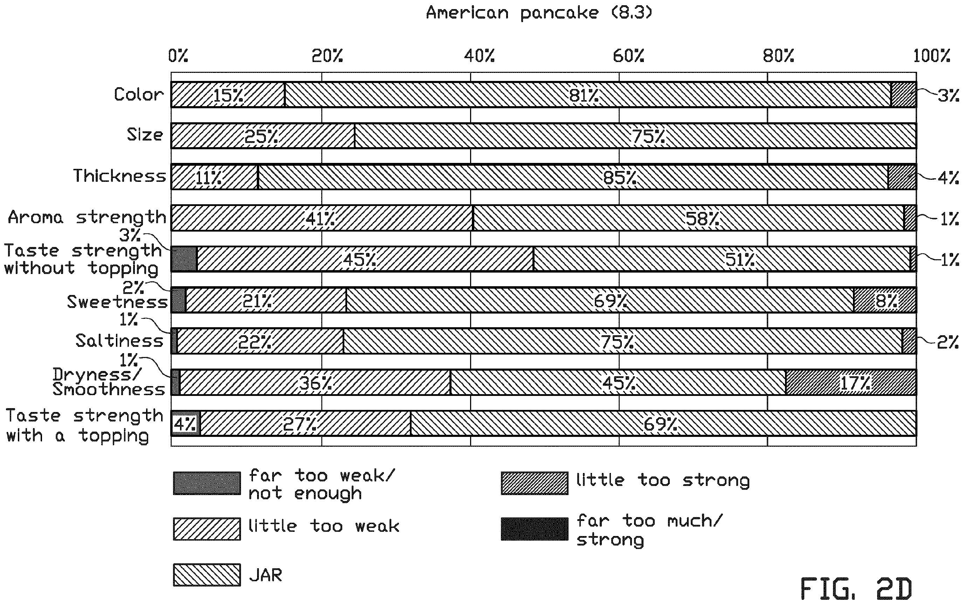

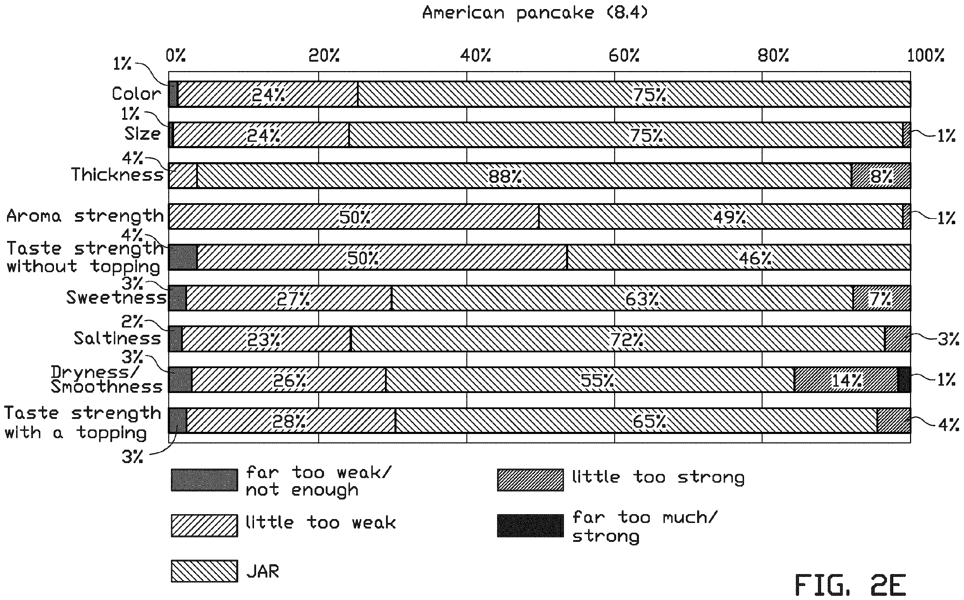

Figure 2 shows that American pancake (8.0), which is the reference pancake, has a JAR% for dryness/smoothness of 61%. This shows that American pancake (8.4) has a very similar JAR% as the reference American pancake and thus very closely resembles the milk based American pancake.

## Claims

1. A method for preparing a batter for a pancake product, comprising

   i) providing a suspension obtained by:

   a) mixing oat flour and water to obtain a mixture, wherein the amount of said oat flour admixed with said water is 8 to 12 wt.% based on the total weight of the mixture;
   b) heating the mixture to a temperature of 70 to 92,5 °C and keeping the mixture at this temperature for a period of between 15 and 70 minutes to allow gelatinization;
   c) cooling down the heated mixture to a temperature in the range of 20 to 50°C;

   to obtain a suspension with a Posthumus viscosity in a range of between 56 s and 155 s at a temperature between 20 to 25 °C, wherein said Posthumus viscosity is determined as described in the description;
   ii) providing conventional batter ingredients for pancake products;
   iii) mixing the suspension and the conventional batter ingredients to obtain said batter.

2. Method according to claim 1, wherein the amount of said oat flour admixed with said water is 9 to 11 wt.% based on the total weight of the mixture; such as around 10 wt. %.

3. Method according to claim 1 or 2, wherein

   the suspension obtained in step i) c) has a Posthumus viscosity in a range of between 61 s and 118 s at a temperature between 20 to 25 °C, wherein said Posthumus viscosity is determined as described in the description, or
   the suspension obtained in step i) c) has a Posthumus viscosity in a range of between 66 s and 98 s at a temperature between 20 to 25 °C, wherein said Posthumus viscosity is determined as described in the description; or
   the suspension obtained in step i) c) has a Posthumus viscosity in a range of between 70 s and 86 s at a temperature between 20 to 25 °C, wherein said Posthumus viscosity is determined as described in the description;
   preferably wherein the suspension obtained in step i) c) has a Posthumus viscosity of between 76 s at a temperature between 20 to 25 °C, wherein said Posthumus viscosity is determined as described in the description.

4. Method according to any of the previous claims, wherein in step i) b) the mixture is heated to a temperature in a range of 72,5 °C to 90 °C, preferably in a range of 75 °C to 88 °C, more preferably in a range of 78 °C to 88 °C, more preferably in a range of 80 °C to 88 °C, even more preferably to a temperature of about 85 °C.

5. Method according to any of the previous claims, wherein in step i)c) the mixture is cooled to a temperature in a range between 22,5 and 45 °C, preferably between 25 and 40 °C, more preferably between 30 and 35 °C, even more preferably to a temperature of about 32,5 °C.

6. Method according to any of the previous claims, wherein the conventional batter ingredient is selected from a group consisting of oil, salt, egg, flour, and optionally sugar additives and/or preservative, or any combination thereof.

7. Method according any of the previous claims, wherein the water content in the prepared batter is 75 to 40 wt.%.

8. Batter, obtainable or obtained by the method of the previous claims.

9. Batter according to claim 8, wherein

the batter has a Posthumus viscosity determined as described in the description in a range of between 10 to 30 s (35 to 240 mPa-s) at a temperature between 20 to 25 °C, and which is a batter for preparing Dutch pancake; or wherein the batter has a Posthumus viscosity determined as described in the description in a range of between 30 to 90 s (240 to $8{,}5 \times 10^4$ mPa-s) at a temperature between 20 to 25 °C, and which is a batter for preparing poffertjes (tiny Dutch pancakes); or wherein the batter has a Posthumus viscosity determined as described in the description in a range of between 100 to 200 s ($2{,}2 \times 10^5$ to $3{,}9 \times 10^9$ mPa·s) at a temperature between 20 to 25 °C, and which is a batter for preparing American pancakes.

10. A method for manufacturing a pancake product, wherein the method comprises the steps of:

- providing a batter according to any of the claims 8 or 9;
- optionally, pre-heating the batter;
- applying the batter on a heating plate;
- baking the batter.

11. Method according to claim 10, wherein the batter is pre-heated to a temperature in a range of 25 to 35°

12. Method according to claim 10 or 11, wherein providing said batter comprises the method according to any of the claims 1 to 7.

13. Method according to any of the claims 10 to 12, wherein the pancake product is selected from the group comprising a Dutch pancake, an American pancakes, a poffertje (tiny Dutch pancake), a crêpe, a mini pancake, and a plate, preferably wherein the pancake product is a Dutch pancake, an American pancake or a poffertje.

14. Pancake product obtained by or obtainable by the method according to any of the claim 10 to 13.

15. Pancake product according to claim 14, wherein the pancake product is a Dutch pancake, an American pancake, a poffertje (tiny Dutch pancake), a crêpe, a mini pancake or a plate, preferably wherein the pancake product is a Dutch pancake, an American pancake or a poffertje.

Posthumus viscosity (s) vs.
Brookfield viscosity (mPa·s)

$y = 12,662e^{0,0978x}$

$R^2 = 0,996$

FIG. 1

EP 4 342 306 A1

American pancake (8.0)

FIG. 2A

American pancake (8.1)

FIG. 2B

EP 4 342 306 A1

EP 4 342 306 A1

American pancake (8.2)

FIG. 2C

American pancake (8.3)

FIG. 2D

American pancake (8.4)

FIG. 2E

EP 4 342 306 A1

Europäisches
Patentamt

European
Patent Office

Office européen
des brevets

# EUROPEAN SEARCH REPORT

Application Number

EP 23 19 8351

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2014/193563 A1 (CARDER GARY D [US] ET AL) 10 July 2014 (2014-07-10) * paragraph [0047]; claims 1-11; figure 2 * | 8-10,12, 14 | INV. A23L7/10 A21D6/00 A21D10/00 A21D10/04 |
| X | US 2004/043123 A1 (TRIANTAFYLLOU OSTE ANGELIKI [SE] ET AL) 4 March 2004 (2004-03-04) * paragraph [0043]; claims 1-34; example 2 * | 1-15 | A21D13/02 A21D13/04 A21D13/06 A21D13/44 A21D13/80 A23C11/10 |
| X | CN 108 887 346 A (LI MINGQI) 27 November 2018 (2018-11-27) * claims 1-6; example 4 * | 8-10,12, 14 | A23L2/38 A23K10/00 |
| A | US 5 686 123 A (LINDAHL LENNART [SE] ET AL) 11 November 1997 (1997-11-11) * column 2, line 56 - line 63; claims 1-18 * | 1-15 | |
| A | HYUN JUNG KIM ET AL: "Interactional Effects of ?-Glucan, Starch, and Protein in Heated Oat Slurries on Viscosity and In Vitro Bile Acid Binding", JOURNAL OF AGRICULTURAL AND FOOD CHEMISTRY, vol. 60, no. 24, 23 May 2012 (2012-05-23), pages 6217-6222, XP055725051, US ISSN: 0021-8561, DOI: 10.1021/jf300786f * page 6218, left-hand column, paragraph 1-2; figure 2; table 1 * | 1-15 | TECHNICAL FIELDS SEARCHED (IPC) A23L A21D A23C |

The present search report has been drawn up for all claims

| Place of search | Date of completion of the search | Examiner |
|---|---|---|
| Munich | 12 February 2024 | Shadid, Rania |

## ANNEX TO THE EUROPEAN SEARCH REPORT
## ON EUROPEAN PATENT APPLICATION NO.

EP 23 19 8351

This annex lists the patent family members relating to the patent documents cited in the above-mentioned European search report.
The members are as contained in the European Patent Office EDP file on
The European Patent Office is in no way liable for these particulars which are merely given for the purpose of information.

12-02-2024

| Patent document cited in search report | Publication date | Patent family member(s) | Publication date |
|---|---|---|---|
| US 2014193563 A1 | 10-07-2014 | US 2014193563 A1 | 10-07-2014 |
| | | US 2017265503 A1 | 21-09-2017 |
| US 2004043123 A1 | 04-03-2004 | AT E354277 T1 | 15-03-2007 |
| | | AT E555662 T1 | 15-05-2012 |
| | | AU 1447302 A | 21-05-2002 |
| | | AU 2002214473 B2 | 10-08-2006 |
| | | CA 2428427 A1 | 16-05-2002 |
| | | CN 1481218 A | 10-03-2004 |
| | | DE 60126809 T2 | 15-11-2007 |
| | | DK 1337153 T3 | 30-04-2007 |
| | | DK 1532862 T3 | 13-08-2012 |
| | | EP 1337153 A1 | 27-08-2003 |
| | | EP 1532862 A2 | 25-05-2005 |
| | | ES 2278797 T3 | 16-08-2007 |
| | | HK 1055882 A1 | 30-01-2004 |
| | | JP 4046608 B2 | 13-02-2008 |
| | | JP 2004512846 A | 30-04-2004 |
| | | NZ 525718 A | 26-11-2004 |
| | | US 2004043123 A1 | 04-03-2004 |
| | | WO 0237970 A1 | 16-05-2002 |
| | | ZA 200303569 B | 30-03-2004 |
| CN 108887346 A | 27-11-2018 | NONE | |
| US 5686123 A | 11-11-1997 | AT E199486 T1 | 15-03-2001 |
| | | AU 7713594 A | 03-04-1995 |
| | | CA 2170988 A1 | 23-03-1995 |
| | | DE 69426834 T2 | 02-08-2001 |
| | | DK 0731646 T3 | 17-04-2001 |
| | | EP 0731646 A1 | 18-09-1996 |
| | | ES 2154684 T3 | 16-04-2001 |
| | | FI 961162 A | 13-03-1996 |
| | | GR 3035983 T3 | 31-08-2001 |
| | | JP 3657003 B2 | 08-06-2005 |
| | | JP H09505204 A | 27-05-1997 |
| | | PL 313475 A1 | 08-07-1996 |
| | | PT 731646 E | 29-06-2001 |
| | | US 5686123 A | 11-11-1997 |
| | | WO 9507628 A1 | 23-03-1995 |

EPO FORM P0459

**REFERENCES CITED IN THE DESCRIPTION**

**Patent documents cited in the description**

- US 20140193563 A1
- US 5686123 A
- CN 108887346 A
- US 20040043123 A1